# FASCICULE DE BREVET EUROPEEN

(11) **EP 4 090 556 B1**
(45) Date de publication et mention de la délivrance du brevet: **27.12.2023**
(21) Numéro de dépôt: 21704858.6
(22) Date de dépôt: 11.01.2021
(51) Int. Cl.: B60Q 1/26, B60Q 1/04, B60R 11/00, B60R 19/48

(54) **ÉLÉMENT DE CARROSSERIE COMPORTANT DES MOYENS DE FIXATION D'ÉQUIPEMENT SIMPLIFIÉS, ET VÉHICULE COMPORTANT UN TEL ÉLÉMENT DE CARROSSERIE**
KAROSSERIEELEMENT, DAS VEREINFACHTE AUSRÜSTUNGSBEFESTIGUNGSMITTEL ENTHÄLT, UND FAHRZEUG, DAS EIN SOLCHES KAROSSERIEELEMENT UMFASST
BODYWORK ELEMENT COMPRISING SIMPLIFIED EQUIPMENT FASTENING MEANS, AND VEHICLE COMPRISING SUCH A BODYWORK ELEMENT

(30) Priorité: 15.01.2020 FR 2000358
(43) Date de publication de la demande: 23.11.2022
(73) Titulaire: Stellantis Auto SAS, 78300 Poissy (FR)
(72) Inventeur: LE FLOCH, Bertrand, 91140 Villebon Sur Yvette (FR); MICHEL, Thierry, 78110 Le Vesinet (FR)
(86) Numéro de dépôt international: PCT/FR2021/050037
(87) Numéro de publication internationale: WO 2021/144522

(56) Documents cités:
- EP-A1- 0 546 938
- WO-A1-2012/095579
- FR-A1- 2 854 598
- US-B1- 6 902 215

## Description

L'invention concerne un élément de carrosserie de véhicule, par exemple de face avant ou arrière de véhicule, apte à recevoir équipement tel qu'un module d'éclairage, ainsi qu'un véhicule comportant un tel élément de carrosserie.

Il est connu de fixer des équipements tels que des modules d'éclairage, comme par exemple des phares anti brouillard, sur un pare-chocs de véhicule. Une fixation directe du module d'éclairage sur le pare-chocs rend cette fixation visible. Une solution pour rendre non visible cette fixation est décrite dans le document FR2854598 qui propose un pare-chocs avant de véhicule sur lequel sont fixés des modules d'éclairage dans des ouvertures dédiées. Le pare-chocs comporte une face interne dirigée vers l'intérieur du véhicule et une face externe dirigée vers l'extérieur du véhicule. Une cavité sur la face externe s'enfonce vers l'intérieur du véhicule. Une paroi de fond située au fond de cette cavité comporte un moyen de fixation du module d'éclairage. Le module d'éclairage est inséré dans cette cavité depuis la face externe du pare-chocs jusqu'à venir au contact de la paroi de fond. La fixation est réalisée par une vis traversant un trou dans la paroi de fond pour se visser dans un alésage disposé à l'arrière du module d'éclairage. La vis est introduite du côté de la face interne du pare-chocs. La fixation du module d'éclairage n'est pas visible depuis l'extérieur du véhicule car cachée par le module d'éclairage.

L'inconvénient une telle solution est qu'elle nécessite de créer une cavité suffisamment profonde pour que l'ensemble du module d'éclairage rentre à l'intérieur, et une paroi au fond de cette cavité pour assurer la fixation du module d'éclairage, ajoutant de la matière au pare-chocs, et donc de la masse et du coût. De plus, le montage est complexe car il nécessite de s'assurer que l'alésage recevant la vis sur le module d'éclairage est bien alignée avec le trou situé dans la paroi de fond, avec une faible visibilité et un accès réduit du fait que le module d'éclairage est dans la cavité. Un autre inconvénient est que ce type de pare-chocs ne permet pas d'avoir une version avec l'ouverture et une version sans ouverture sans faire des modifications importantes au pare-chocs du fait de la présence de la cavité et de la paroi de fond.

L'objectif de l'invention est de remédier à ces inconvénients. En particulier, un des buts de l'invention est de proposer un élément de carrosserie de véhicule apte à recevoir un module d'éclairage, qui soit simple à fabriquer et de coût réduit. Notamment, l'un des objectifs est de réduire la quantité de matière utilisée pour réaliser l'élément de carrosserie sur lequel est destiné à être fixé un équipement tel qu'un module d'éclairage, sans dégrader la qualité d'aspect dudit élément de carrosserie et tout en permettant un montage simple dudit équipement.

Ce but est atteint selon l'invention, grâce à un élément de carrosserie en matière plastique moulée, de préférence pour une face avant ou arrière de véhicule, comportant une face interne qui est destinée à être dirigée vers l'intérieur du véhicule, et une face externe qui est destinée à être dirigée vers l'extérieur du véhicule, l'élément de carrosserie comportant une ouverture destinée à recevoir un équipement et des moyens de fixation disposés autour de ladite ouverture et sur la face interne, destinés à fixer ledit équipement, dont l'élément de carrosserie comporte une rainure sur sa face externe et disposée de part et d'autre de l'ouverture, les moyens de fixation étant des fûts de fixation en saillie de la face interne et disposés en vis-à-vis de la rainure.

Ainsi avantageusement, les imperfections de surface que peuvent créer les fûts de fixation de l'équipement au moment du moulage de l'élément de carrosserie, sur la face externe du pare-chocs par retassure de la matière, sont situées au fond de la rainure et donc très difficilement perceptibles par un usager extérieur audit véhicule. De plus, la quantité de matière nécessaire pour réaliser ces fûts de fixation et la rainure sont faibles par rapport à un même élément de carrosserie ne comportant pas ces fûts de fixation et cette rainure, et il n'est pas nécessaire de réaliser une cavité avec une paroi de fond qui utilise plus de matière. Un autre avantage est que l'ouverture peut être réalisée par découpage de l'élément de carrosserie suivant le tracé de ladite ouverture. Il est donc simple de créer une version de l'élément de carrosserie sans ouverture et une version avec ouverture en partant de la même pièce par simple découpage de l'ouverture dans l'élément de carrosserie, les moyens de fixation restant présents sur la face interne une fois la découpe faite.

Dans un mode de réalisation préféré de l'invention, l'élément de carrosserie comporte sur sa face interne une nervure de forme complémentaire à la rainure de sorte que l'épaisseur de l'élément de carrosserie soit sensiblement identique au fond de ladite rainure et autour de cette rainure.

Ainsi avantageusement, l'ensemble de l'élément de carrosserie peut être d'épaisseur générale relativement constante afin d'optimiser la quantité de matière utilisée et l'homogénéité de la résistance mécanique.

Dans un autre mode de réalisation de l'invention, la rainure contourne l'ouverture de manière à former une ligne en forme de "C" comportant deux branches primaires de part et d'autre de l'ouverture et une branche secondaire entre ces deux branches primaires, l'élément de carrosserie comportant trois fûts de fixation disposés sur la face interne en vis-à-vis de chacune de ces branches de la rainure, la branche secondaire reliant les deux branches primaires.

Ainsi avantageusement, au moins trois fûts de fixation peuvent être disposés autour de l'ouverture de manière suffisamment écartés l'un de l'autre afin d'assurer une fixation stable d'un équipement, tel qu'un module d'éclairage, sur le pare-chocs à l'aide de ces fûts.

Dans un autre mode de réalisation de l'invention, l'élément de carrosserie comportant un module d'éclairage fixé sur les fûts, le module d'éclairage comportant un boîtier, une source de lumière et une glace par laquelle est diffusée la lumière produite par ladite source de lumière, ladite glace étant fixée audit boîtier et ledit module d'éclairage étant agencé de sorte que la glace soit dans l'ouverture lorsque le module d'éclairage est fixé à l'élément de carrosserie.

L'invention porte aussi sur un pare-chocs de véhicule comportant ou formé par un élément de carrosserie tel que décrit précédemment.

La réalisation d'un pare-chocs à l'aide de ou comportant un tel élément de carrosserie est particulièrement intéressante car il est courant de fixer des équipements, comme par exemple des modules d'éclairage tels que des phares antibrouillards, des projecteurs d'éclairage ou des feux de signalisation sur un pare-chocs. De plus, c'est un élément de carrosserie très visible, et donc pour lequel les défauts de surfaces ne doivent pas être visible par un utilisateur du véhicule.

L'invention porte également sur un véhicule comportant un élément de carrosserie ou un pare-chocs tel que décrit précédemment.

Ainsi avantageusement, le coût de fabrication du véhicule est réduit sans dégrader l'esthétique.

Dans un mode de réalisation particulier du véhicule suivant l'invention, l'équipement est un module d'éclairage qui forme un feu de signalisation ou un projecteur pour éclairer l'avant du véhicule.

Dans une autre mode de réalisation du véhicule, l'élément de carrosserie forme un pare-chocs s'étendant depuis le bas de la face avant du véhicule jusqu'aà un parebrise du véhicule.

Ainsi avantageusement, un seul élément de carrosserie forme l'ensemble de la face avant du véhicule, réduisant donc le nombre de pièces et la complexité de fabrication du véhicule, tout en assurant la fixation d'équipement, tel que des modules d'éclairage nécessaire afin de signaliser le véhicule et/ou d'éclairer la route devant ledit véhicule. Le véhicule est ainsi fabriqué à faible coût, sans dégrader l'esthétique dudit véhicule.

Dans une autre mode de réalisation du véhicule, l'élément de carrosserie comporte deux ouvertures disposés symétriquement par rapport à un plan longitudinal et vertical médian du véhicule.

L'invention sera mieux comprise à la lecture de la description qui va suivre, donnée uniquement à titre d'exemple et faite en se référant aux dessins annexés, sur lesquels :
[fig. 1] est une vue d'un véhicule comportant un élément de carrosserie suivant l'invention formant un pare-chocs avant.
[Fig. 2] est une vue de face du pare-chocs avant de la figure 1 au niveau d'un des modules d'éclairage.
[Fig. 3] est une vue montrant la face interne du pare-chocs avant au niveau du module d'éclairage.
[Fig. 4] est une vue en coupe du pare-chocs avant suivant un plan vertical et longitudinale au véhicule au niveau du dispositif d'éclairage.

Les dessins sont des représentations schématiques pour faciliter la compréhension de l'invention. Les composants ne sont pas forcément représentés à l'échelle. Les mêmes références correspondent aux mêmes composants d'une figure à l'autre.

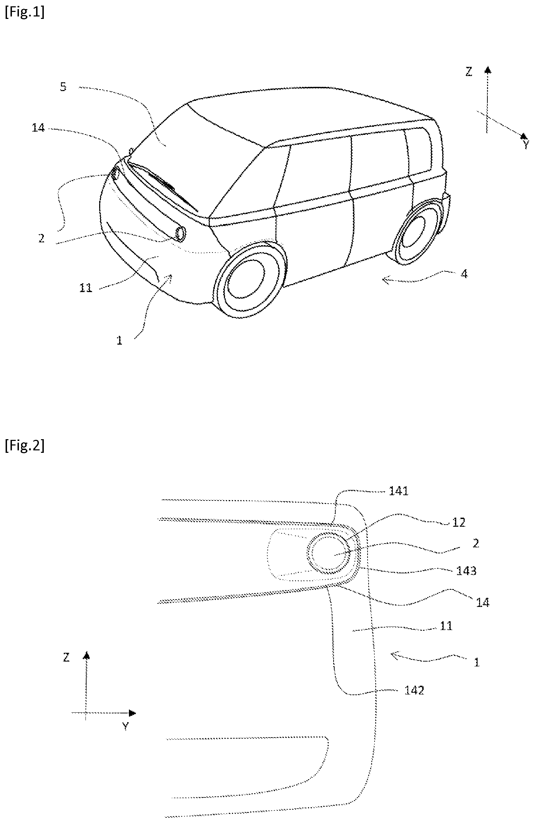

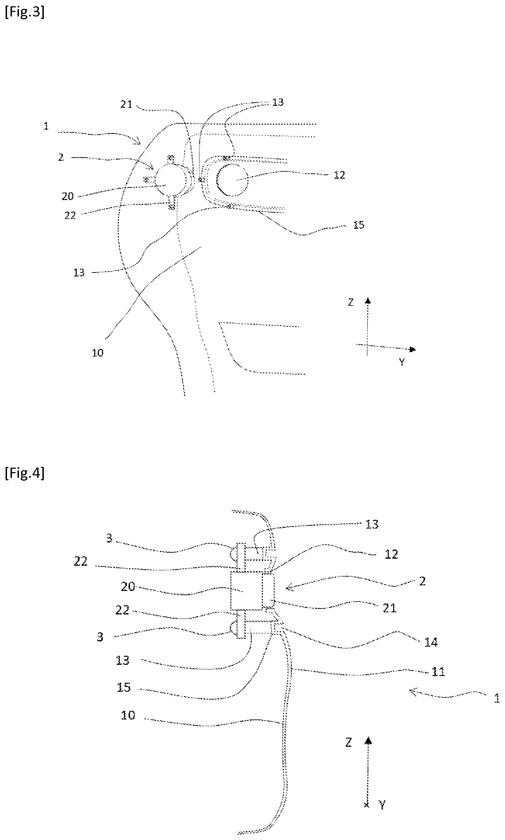

La figure 1 illustre un véhicule 4 comportant un pare-chocs 1 en face avant. Le pare-chocs 1 est un élément de carrosserie 1 réalisé par injection d'une matière plastique dans un moule. Dans l'exemple de la figure 1, le pare-chocs 1 s'étend depuis la base d'un pare-brise 5 jusqu'au bas de la face avant du véhicule 4. La face avant du véhicule est ainsi formée par un seul élément de carrosserie 1. Deux modules d'éclairage 2 sont fixés aux pare-chocs 1, de part et d'autre d'un plan vertical longitudinal médian au véhicule 4. Le pare-chocs 1 comporte une face interne 10 qui est dirigée vers l'intérieur du véhicule 4 comme illustré en figure 3, et une face externe 11 qui est dirigée vers l'extérieur du véhicule 4. Il comporte en outre des moyens de fixation 13 des modules d'éclairage 2 sur sa face interne 10 (illustrés en figures 3 et 4), chacune des ouvertures 12 recevant un des modules d'éclairage 2.

Les figures 2 et 3 illustrent la partie du pare-chocs 1 comportant un des modules d'éclairage 2. Le pare-chocs 1 comporte sur la face externe 11 une rainure 14 à proximité de l'ouverture 12 et qui contourne ladite ouverture 12. Autour de cette ouverture 12, la rainure 14 a une forme générale en "C", c'est à dire qu'elle comporte deux branches primaires 141 et 142 situées de part et d'autre de ladite ouverture 12 et une branche secondaire 143 reliant les deux branches primaires 141 et 142. Comme illustré en figure 1, les deux branches primaires 141 et 142 situées de part et d'autres de l'ouverture 12 sont sensiblement horizontales, dans une direction Y sensiblement transversale au véhicule, en se plaçant dans le référentiel du véhicule 4, et s'étendent jusqu'aux autres branches primaires disposées de part et d'autre de la deuxième ouverture. Les branches primaires 141 et 142 sont reliées entre elles par les branches secondaires 143, de sorte à former une rainure 14 unique dessinant une forme oblongue fermée de direction générale Y transversale au véhicule 4, symétrique par rapport au plan longitudinal vertical médian au véhicule, comme illustré en figure 1, et les deux ouvertures 12 étant disposées à l'intérieur de cette forme oblongue. C'est-à-dire que l'une des branches primaires 141 est disposée au-dessus de l'ouverture 12 et l'autre branche primaire 142 est disposée en dessous de l'ouverture 12, le dessus et le dessous étant pris dans le référentiel du véhicule 4 suivant un axe verticale Z du véhicule 4, et la branche secondaire 143 relie les extrémités de chacune de ses branches primaires 141 et 142 suivant une direction générale sensiblement parallèle à la direction verticale Z.

Cette rainure 14 forme sur la face interne 10 du pare-chocs 1 une nervure 15 de forme complémentaire à ladite rainure 14, permettant d'avoir une épaisseur du pare-chocs 1 sensiblement constante au niveau de cette rainure et autour de cette rainure 14. Les moyens de fixation 13 sont sous la forme de trois fûts 13 en saillie de la face interne 10 en direction de l'intérieur du véhicule 4, disposées sur la nervure 15. Ces fûts 13 sont disposés chacun en vis-à-vis d'une des branches primaires 141, 142 et de la branche secondaire 143.

Comme illustré en figure 3, le module d'éclairage 2 comporte un boîtier 20 sur lequel est fixée une vitre 21. Une source de lumière à l'intérieur du boîtier émet de la lumière qui est diffusé au travers de la vitre 21. Le boîtier 20 comporte en outre des pattes de fixation 22 comportant chacune à leur extrémité un trou de passage. Ces pattes de fixation 22 sont agencées de manière à ce que chaque trou de passage se place en vis-à-vis d'un des fûts de fixation 13. Le module d'éclairage 2 est fixé au pare-chocs 1 par des vis 3 traversant chaque trou de passage et venant se visser sur les fûts de fixation 13, comme illustré en figure 4. Les fûts de fixation 13 peuvent comporter des alésages permettant aux vis de se visser facilement dans lesdits fûts 13.

Les pattes de fixation 22 sont reliées au boîtier 20. Lorsque le module d'éclairage 2 est fixé au pare-chocs 1, la vitre 21 est disposée dans l'ouverture 12 ou en vis-à-vis de l'ouverture 12, de sorte que la lumière émise par le module d'éclairage 2 soit diffusée vers l'avant du véhicule 4.

Le module d'éclairage 2 est par exemple un projecteur éclairant la route devant le véhicule 4, ou encore un phare de signalisation tel qu'un clignotant ou une veilleuse, ou encore un module d'éclairage 2 comportant plusieurs fonctions d'éclairage.

Dans le mode de réalisation présenté dans les figures, le pare-chocs 1 comporte qu'une seule rainure 14 entourant les deux modules d'éclairage 2. En variante, le pare-chocs 1 peut comporter plusieurs rainures 14 disposées de part et d'autre de chaque ouverture 12.

Dans le mode de réalisation illustré dans la figure 1, le pare-chocs 1 comporte seulement deux ouvertures 12 avec un module d'éclairage associé à chacune de ces ouvertures 12. En variante non illustrée, le pare-chocs 1 peut comporter qu'une seule ouverture 12 ou plus de deux ouvertures 12 associées chacune à un module d'éclairage, ou un autre équipement tel qu'une grille de passage d'air ou encore un élément de décoration.

En variante non illustrée, le pare-chocs 1 peut ne pas s'étendre jusqu'au parebrise 5, un autre élément de carrosserie faisant la jonction entre le pare-brise 5 et le pare-chocs 1.

En autre variante non illustrée, l'élément de carrosserie 1 peut être une autre pièce de carrosserie que le pare-chocs 1, comme par exemple un panneau de carrosserie disposé au-dessus d'un pare-chocs, entre un pare-chocs et le parebrise 5 du véhicule.

Dans une autre variante non illustrée, l'élément de carrosserie 1 est un pare-chocs arrière ou un panneau de carrosserie disposé à l'arrière du véhicule, les modules d'éclairage 2 étant des signalisations lumineuses arrières du véhicule diffusant vers l'arrière du véhicule.

## Revendications

1. Elément de carrosserie (1) en matière plastique moulée, de préférence pour une face avant ou arrière de véhicule, comportant une face interne (10) qui est destinée à être dirigée vers l'intérieur du véhicule, et une face externe (11) destinée à être dirigée vers l'extérieur du véhicule, l'élément de carrosserie (1) comportant une ouverture (12) destinée à recevoir un équipement (2) et des moyens de fixation (13) disposés sur la face interne (10) autour de ladite ouverture (12) , destinés à fixer ledit équipement (2), **caractérisé en ce que** l'élément de carrosserie (1) comporte une rainure (14) sur sa face externe (11) et disposée de part et d'autre de l'ouverture (12), les moyens de fixation (13) étant des fûts de fixation en saillie de la face interne (10) et disposés en vis-à-vis de la rainure (14).

2. Elément de carrosserie (1) suivant la revendication 1, **caractérisé en ce qu'**il comporte sur sa face interne (10) une nervure (15) de forme complémentaire à la rainure (14) de sorte que l'épaisseur de l'élément de carrosserie (1) soit sensiblement identique au fond de ladite rainure (14) et autour de cette rainure (14).

3. Elément de carrosserie (1) suivant l'une des revendications précédentes, dont la rainure (14) contourne l'ouverture (12) de manière à former une ligne en forme de "C" comportant deux branches (141, 142) primaires de part et d'autre de l'ouverture (12) et une branche secondaire (143) entre ces deux branches primaires (141, 142), l'élément de carrosserie (1) comportant trois fûts de fixation (13) disposés sur la face interne (10) en vis-à-vis de chacune de ces branches (141, 142, 143) de la rainure (14), la branche secondaire (143) reliant les deux branches primaires (141, 142).

4. Elément de carrosserie (1) suivant l'une des revendications précédentes, comportant un module d'éclairage (2) fixé sur les fûts (13), le module d'éclairage comportant un boîtier (20), une source de lumière et une glace (21) par laquelle est diffusée la lumière produite par ladite source de lumière, ladite glace (21) étant fixée audit boîtier (20) et ledit module d'éclairage (20) étant agencé de sorte que la glace (21) soit dans l'ouverture (12) lorsque le module d'éclairage (2) est fixé à l'élément de carrosserie (1).

5. Pare-chocs de véhicule **caractérisé en ce qu'**il comporte ou est formé par un élément de carrosserie (1) suivant l'une des revendications précédentes.

6. Véhicule (4) comportant un élément de carrosserie (1) suivant l'une des revendications 1 à 4 ou un pare-chocs suivant la revendication 5.

7. Véhicule (4) suivant la revendication 6 prise en combinaison avec la revendication 4, dont le module d'éclairage (2) est un feu de signalisation ou un projecteur pour éclairer l'avant du véhicule (4).

8. Véhicule (4) suivant l'une des revendications 6 ou 7, dont l'élément de carrosserie forme un pare-chocs s'étendant depuis le bas de la face avant du véhicule (4) jusqu'à un parebrise (5) du véhicule (4).

9. Véhicule (4) suivant l'une des revendications 6 à 8, dont l'élément de carrosserie (1) comporte deux ouvertures (12) disposés symétriquement par rapport à un plan longitudinal et vertical médian du véhicule (4).

## Patentansprüche

1. Karosserieteil (1) aus einem geformten Kunststoff, vorzugsweise für eine Vorderseite oder eine Rückseite eines Fahrzeugs, mit einer Innenfläche (10), die zum Innenraum des Fahrzeugs gerichtet werden soll, und einer Außenfläche (11), die zum Außenbereich des Fahrzeugs gerichtet ist, wobei das Karosserieteil (1) eine Öffnung (12) zur Aufnahme einer Ausrüstung (2) und Befestigungseinrichtung aufweist (13), die auf der Innenseite (10) um die Öffnung (12) herum angeordnet sind, um die Einrichtung (2) zu befestigen, **dadurch gekennzeichnet, dass** das Karosserieteil (1) an seiner Außenseite (11) eine Nut (14) aufweist, die auf beiden Seiten der Öffnung (12) angeordnet ist, wobei die Befestigungsmittel (13) von der Außenseite vorstehende Befestigungsfässer sind Innenraum (10) und gegenüber der Nut (14) angeordnet.

2. Karosserieteil (1) nach Anspruch 1, **dadurch gekennzeichnet, dass** es an seiner Innenfläche (10) eine Rippe (15) aufweist, die komplementär zur Nut (14) ist, sodass die Dicke des Karosserieteils (1) im Wesentlichen gleich dem Boden der Nut (14) und um diese Nut (14) herum ist.

3. Karosserieteil (1) nach einem der vorhergehenden Ansprüche, dessen Nut (14) die Öffnung (12) umgeht, um eine "C"-förmige Linie zu bilden, die zwei Primärschenkel (141, 142) beiderseits der Öffnung (12) und einen Sekundärschenkel (143) zwischen diesen beiden Primärschenkeln aufweist (141, 142), wobei das Karosserieteil (1) drei Befestigungsfässer (13) aufweist, die auf der Innenseite (10) angeordnet sind, die jedem dieser Schenkel (141, 142, 143) der Nut (14) gegenüberliegt, wobei der Nebenschenkel (143) die beiden Primärschenkel (14) verbindet (141, 142).

4. Karosserieteil (1) nach einem der vorhergehenden Ansprüche, das ein Beleuchtungsmodul (2) aufweist, das an den Fässern (13) befestigt ist, wobei das Beleuchtungsmodul ein Gehäuse (20), eine Lichtquelle und ein Eis (21) aufweist, durch das das von der Lichtquelle erzeugte Licht diffundiert wird, wobei das Eis (21) an dem Gehäuse (20) und dem Modul befestigt ist Die Beleuchtung (20) ist so angeordnet, dass die Abschlussscheibe (21) in der Öffnung (12) liegt, wenn das Beleuchtungsmodul (2) am Karosserieteil (1) befestigt ist.

5. Fahrzeugstoßfänger, **dadurch gekennzeichnet, dass** er ein Karosserieelement (1) nach einem der vorhergehenden Ansprüche aufweist oder gebildet ist.

6. Fahrzeug (4) mit einem Karosserieteil (1) nach einem der Ansprüche 1 bis 4 oder einem Stoßfänger nach Anspruch 5.

7. Fahrzeug (4) nach Anspruch 6 in Kombination mit Anspruch 4, dessen Beleuchtungsmodul (2) eine Signalleuchte oder ein Scheinwerfer zum Beleuchten der Vorderseite des Fahrzeugs (4) ist.

8. Fahrzeug (4) nach einem der Ansprüche 6 oder 7, bei dem das Karosserieelement eine Stoßscheibe bildet, die sich von der Unterseite der Vorderseite des Fahrzeugs (4) zu einer Windschutzscheibe (5) des Fahrzeugs (4) erstreckt.

9. Fahrzeug (4) nach einem der Ansprüche 6 bis 8, dessen Karosserieteil (1) zwei Öffnungen (12) aufweist, die symmetrisch zu einer mittleren Längs- und Vertikalebene des Fahrzeugs (4) angeordnet sind.

## Claims

1. Body element (1) of molded plastic, preferably for a front or rear face of a vehicle, having an inner face (10) that is intended to be directed towards the inside of the vehicle, and an outer face (11) that is intended to be directed towards the outside of the vehicle, the body element (1) having an opening (12) intended to receive equipment (2) and means of fastening (13) arranged on the inner face (10) around the said opening (12), intended to secure the said equipment (2), characterized as the body element (1) has a groove (14) on its outer face (11) and arranged on both sides of the opening (12), means of fastening (13) are mounting drums protruding from the inner face (10) and placed opposite the groove (14).

2. Body element (1) following Claim 1, **characterized by** having on its inner face (10) a rib (15) of a shape complementary to the groove (14) so that the thickness of the body element (1) is substantially identical to and around the bottom of the groove (14).

3. Body element (1) following one of the preceding claims, the groove of which (14) circumvents the opening (12) so as to form a line in the shape of a "C" comprising two primary branches (141, 142) on both sides of the opening (12) and a secondary branch (143) between those branches two primary branches (141, 142), the body element (1) having three attachment drums (13) arranged on the inner face (10) opposite each of these branches (141, 142, 143) of the groove (14), the secondary branch (143) connecting the two primary branches (141, 142).

4. Body element (1) in accordance with one of the preceding claims, consisting of a light module (2) attached to the drums (13), the light module consisting of a housing (20), a light source and an ice (21) in which the light produced by the said light source is diffused, the said ice (21) being fixed to that housing (20), and the said lighting module (20) being arranged so that the ice (21) is in the opening (12) when the lighting module (2) is attached to the body element (1).

5. A vehicle bumper that is **characterized by** or is formed by a body element (1) in accordance with one of the preceding claims.

6. Vehicle (4) having a body element (1) following one of the claims 1 to 4 or a bumper following claim 5.

7. Vehicle (4) following Claim 6 in combination with Claim 4, whose light module (2) is a traffic light or headlamp to illuminate the front of the vehicle (4).

8. Vehicle (4) in accordance with one of the claims 6 or 7, the body part of which forms a bumper extending from the bottom of the front of the vehicle (4) to a bumper (5) of the vehicle (4).

9. Vehicle (4) following one of the claims 6 to 8, the body element of which (1) has two openings (12) arranged symmetrically in relation to a median longitudinal and vertical plane of the vehicle (4).
